# EUROPÄISCHE PATENTSCHRIFT

(11) **EP 2 837 476 B1**
(45) Veröffentlichungstag und Bekanntmachung des Hinweises auf die Patenterteilung: **22.06.2016**
(21) Anmeldenummer: 14180164.7
(22) Anmeldetag: 07.08.2014
(51) Int. Cl.: B28B 1/20, C04B 28/04

(54) **Betonbauteil, das im Schleuderverfahren hergestellt und als Stütze oder Mast ausgebildet ist, bestehend aus ultrahochfestem Beton**
Concrete building element, prepared by a centrigual process being pilar or pole shaped and made of ultra high performance concrete
Élément de construction formant comme un mât ou un poteau, produit du procédé de rotomoulage et comprenant une béton ultra-haute résistance

(30) Priorität: 15.08.2013 DE 102013108836
(43) Veröffentlichungstag der Anmeldung: 18.02.2015
(73) Patentinhaber: Europoles GmbH & Co. KG, 92318 Neumarkt (DE)
(72) Erfinder: Lieb, Helmut, 92318 Neumarkt (DE); Kastner, Roland, 92369 Sengenthal (DE); Dittmar, Frank, 92318 Neumarkt (DE); Ma, Jianxin, 39106 Magdeburg (DE)
(74) Vertreter: Dr. Gassner & Partner mbB

(56) Entgegenhaltungen:
- Michael Schmidt ET AL: "Ultra-High-Performance Concrete: Research, Development and Application in Europe INTRODUCTION", , 31. Dezember 2005 (2005-12-31), XP055101715, Gefunden im Internet: URL:http://dfpcorec-p.internal.epo.org/wf/ storage/1442655F0980000A996/originalPdf [gefunden am 2014-02-12]
- YAZICI ET AL: "The effect of curing conditions on compressive strength of ultra high strength concrete with high volume mineral admixtures", BUILDING AND ENVIRONMENT, PERGAMON PRESS, OXFORD, GB, Bd. 42, Nr. 5, 22. Dezember 2006 (2006-12-22), Seiten 2083-2089, XP005811329, ISSN: 0360-1323, DOI: 10.1016/J.BUILDENV.2006.03.013
- DATABASE WPI Week 201174 Thomson Scientific, London, GB; AN 2011-N72216 XP002733738, & CN 102 199 021 A (UNIV DALIAN TECHNOLOGY) 28. September 2011 (2011-09-28)
- RAJ R RATHAN ET AL: "Evaluation and Mix Design for Ternary Blended High Strength Concrete", PROCEDIA ENGINEERING, ELSEVIER, AMSTERDAM, NL, Bd. 51, 25. April 2013 (2013-04-25), Seiten 65-74, XP028588510, ISSN: 1877-7058, DOI: 10.1016/J.PROENG.2013.01.012
- ZHANG M H ET AL: "Resistance of high-strength concrete to projectile impact", INTERNATIONAL JOURNAL OF IMPACT ENGINEERING, PERGAMON, GB, Bd. 31, Nr. 7, 1. August 2005 (2005-08-01) , Seiten 825-841, XP027719296, ISSN: 0734-743X [gefunden am 2005-08-01]
- HORSZCZARUK ET AL: "Hydro-abrasive erosion of high performance fiber-reinforced concrete", WEAR, ELSEVIER SEQUOIA, LAUSANNE, CH, Bd. 267, Nr. 1-4, 15. Juni 2009 (2009-06-15), Seiten 110-115, XP026133248, ISSN: 0043-1648, DOI: 10.1016/J.WEAR.2008.11.010 [gefunden am 2009-05-23]
- DATABASE WPI Week 201024 Thomson Scientific, London, GB; AN 2010-D68387 XP002733739, & JP 2010 070395 A (KAO CORP) 2. April 2010 (2010-04-02)

## Beschreibung

In der Praxis wird beim Einsatz von Fertigteilen im Hochbau beispielsweise Normalbeton der Festigkeitsklassen C40/50 bis C60/75 in Verbindung mit Bewehrung der Güte B500B (Normalstahl) eingesetzt. Für Anwendungen im Bereich schlanker Stützen und bei hochbeanspruchten Brückenbauteilen kommen teilweise auch höherfeste Betone bis zur Festigkeitsklasse C100/115 zum Einsatz. Für Bauwerke mit sehr schlanken oder hochbelasteten Stützen, die z. B. bei Parkhäusern, Büro- oder Hoteltürmen oder für Repräsentationsbauten eingesetzt werden, werden häufig Stahlverbundstützen verwendet. Allerdings weisen diese den Nachteil auf, dass der Stahlanteil sehr hoch ist, zudem führt dieser hohe Stahlanteil zu beträchtlichen Herstellungskosten.

Als ultrahochfesten Beton (ultra high performance concrete, UHPC) bezeichnet man im Allgemeinen einen Beton, dessen Druckfestigkeit wenigstens 140 N/mm² beträgt.

Michael Schmidt et al in "Ultra-High-Performance Concrete: Research, Development and Application in Europe" (2005), H. YAZICI in "The effect of curing conditions on compressive strength of ultra high strength concrete with high volume mineral admixtures" (2006), CN 102 199 021 A, RAJ R RATHAN et al in "Evaluation and Mix Design for Ternary Blended High Strength Concrete" in Procedia Engineering (2013), M. ZHANG et al in "Resistance of high-strength concrete to projectile impact" in International Journal of Impact Engineering, Bd. 31, Nr. 7 (2005) und HORSZCZARUK et al in "Hydro-abrasive erosion of high performance fiberreinforced concrete" in Wear, Bd. 267, Nr. 1-4 (2009) offenbaren ultrahochfeste Betone enthaltend magmatische Gesteine als Zuschlagstoff.

Daneben sind selbstverdichtender Beton (self compacting concrete, SCC) und Rüttelbeton bekannt.

Die bisher entwickelten ultrahochfesten Betone (UHPC) werden in der Praxis nur selten eingesetzt, da diese Betonmischungen extrem teuer sind, typischerweise betragen die Kosten etwa das 10-fache eines Normalbetons. Herkömmliche ultrahochfeste Betone enthalten unter anderem sehr teure Zusatzmittel und Zusatzstoffe, wodurch der hohe Preis resultiert. Zudem müssen diese Zusatzstoffe oder Füllstoffe hochgenau gesiebt werden, um eine hohe Dichte (Lagerungsdichte) zu erhalten.

Ein Nachteil bei der Verarbeitung von ultrahochfesten Beton ist seine Klebrigkeit, so dass er auf herkömmlichem Wege nicht gepumpt werden kann. Das Einbringen in eine Form erfolgt daher überwiegend von Hand, wodurch der Aufwand bei der Verarbeitung steigt.

Der Erfindung liegt daher die Aufgabe zugrunde, ein Betonformteil aus ultrahochfestem Beton anzugeben, welches im Vergleich zu herkömmlichen Betonbauteilen einen geringeren Anteil an Stahlbewehrung enthält und dabei schlanker und kostengünstiger hergestellt werden kann.

Zur Lösung dieser Aufgabe schlägt die vorliegende Anmeldung ein Betonformteil gemäß Anspruch 1 vor.

Die Erfindung beruht auf der Erkenntnis, dass ein kostengünstiges ultrahochfestes Betonformteil hergestellt werden kann, wenn im Beton anstelle der bisher verwendeten sehr teuren chemischen Zuschläge ein magmatisches Gestein in Form von Splitt als harter Steinzuschlag bzw. Gesteinskörnung verwendet wird. Dieser Werkstoff ist kostengünstig erhältlich und praktisch überall verfügbar. Der Splitt kann in der Nähe eines Produktionsstandortes abgebaut werden, so dass keine langen und damit teuren Transporte erforderlich sind.

Das magmatische Gestein ist vorzugsweise vulkanisches Gestein (Vulkanit), vorzugsweise Basalt und/oder Andesit und/oder Trachyt.

Alternativ oder zusätzlich kann das magmatische Gestein auch Tiefengestein (Plutonit) aufweisen, vorzugsweise Granit und/oder Diorit und/oder Syenit.

Selbstverständlich kommt auch eine Mischung von Vulkanit und Plutonit in Frage. Ebenso kann Gneis enthalten sein.

Das magmatische Gestein wird in verarbeiteter Form eingesetzt, nachdem es zu Splitt einer festgelegten Körnung verarbeitet worden ist. Die Erfindung basiert darauf, dass trotz der gebrochenen, zu Splitt verarbeiteten Materialien eine Handhabung und Verarbeitung der Betonmischung möglich ist, da die Sieblinie der Zuschläge (Zusatzstoffe und Zusatzmittel) entsprechend aufgebaut und abgestimmt ist.

Vorzugsweise enthält der ultrahochfeste Beton Splitt, insbesondere Basaltsplitt der Körnung 0 bis 8 mm.

Zusatzstoffe können in einem Anteil von ≥ 5 % der Zementmasse enthalten sein.

Bei dem fur Herstellung des Betonformteils angesetzten ultrahochfesten Beton wird es bevorzugt, dass ein Kubikmeter Beton bzw. die zugehörige Betonmischung 450 kg bis 650 kg Zement enthält. Die genaue Menge kann in Abhängigkeit der gewünschten Eigenschaften innerhalb dieser Grenzen variiert werden.

Es liegt auch im Rahmen der Erfindung, dass ein Kubikmeter des ultrahochfesten Betons bzw. die zugehörige Betonmischung 120 kg bis 160 kg Wasser enthält. Die genaue Menge des zugesetzten Wassers liegt zwischen diesen Grenzwerten.

Vorzugsweise enthält ein Kubikmeter des erfindungsgemäßen ultrahochfesten Betons bzw. die zugehörige Betonmischung 500 kg bis 1.000 kg Sand.

Gegebenenfalls kann dem ultrahochfesten Beton bzw. der zugehörigen Betonmischung pro Kubikmeter 60 kg bis 100 kg Microsilikapulver zugesetzt sein. Durch das Zusetzen des Microsilikapulvers verbessern sich die Eigenschaften des hergestellten Betons sowie die Verarbeitbarkeit.

Es ist auch möglich, dem ultrahochfesten Beton bzw. der zugehörigen Betonmischung 50 kg bis 200 kg Quarzmehl pro Kubikmeter zuzusetzen. Daneben können dem Beton Polypropylen-Microfasern in einer Menge von 0,5 kg bis 2,5 kg pro Kubikmeter zugesetzt sein.

Optional können dem ultrahochfesten Beton bzw. der zugehörigen Betonmischung Zusatzmittel mit einem Masseanteil von weniger als 5 % zugegeben werden. Die Zusatzmittel können insbesondere Fließmittel umfassen.

Der ultrahochfeste Beton zeichnet sich dadurch aus, dass er eine Druckfestigkeit (Zylinderdruckfestigkeit) von wenigstens 140 N/mm² und/oder einem Elastizitätsmodul von wenigstens 56.000 N/mm² besitzt.

Vorzugsweise besitzt der ultrahochfeste Beton einen Elastizitätsmodul von wenigstens 55.000 N/mm², vorzugsweise 65.000 N/mm² oder mehr.

Die Erfindung betrifft ein Betonbauteil, das im Schleuderverfahren hergestellt ist. Durch die während des Schleudervorgangs wirkenden Zentrifugalkräfte wird eine besonders hohe Dichtheit bzw. Lagerungsdichte des Gefüges erreicht. Das erfindungsgemäße Betonbauteil zeichnet sich dadurch aus, dass es aus ultrahochfestem Beton der beschriebenen Art besteht und mittels der beschriebenen Betonmischung hergestellt ist. Aufgrund der höheren Druckfestigkeit kann das erfindungsgemäße Betonbauteil wesentlich schlanker im Vergleich zu herkömmlichen Betonbauteilen ausgebildet werden. Die höhere Steifigkeit der Bauteile resultiert in geringeren Verformungen bei Belastungen.

Das erfindungsgemäße Betonbauteil ist als Stütze oder Mast ausgebildet und weist eine schlaffe oder eine vorgespannte Stahlbewehrung auf. Erfindungsgemäße Betonbauteile, die im Schleuderverfahren hergestellt sind, zeichnen sich durch einen geringeren Anteil der Stahlbewehrung im Vergleich zu herkömmlichen Betonbauteilen, insbesondere Maste oder Stützen, aus, zudem wird zu ihrer Herstellung der vergleichsweise kostengünstige ultrahochfeste Beton verwendet, dessen Kosten mit denen von Normalbeton vergleichbar sind. Die Erfindung ermöglicht somit die Herstellung besonders schlanker Maste und Stützen aus ultrahochfesten Beton im Schleuderverfahren, ohne dass sich dadurch höhere Kosten ergeben.

Die Erfindung wird nachfolgend anhand eines Ausführungsbeispiels unter Bezugnahme auf die Zeichnungen erläutert. Die Zeichnungen sind schematische Darstellungen und zeigen:
- Figur 1: eine Seitenansicht eines als Stütze ausgebildeten erfindungsgemäßen Betonbauteils; und
- Figur 2: einen Schnitt durch die in Fig. 1 gezeigte Stütze.

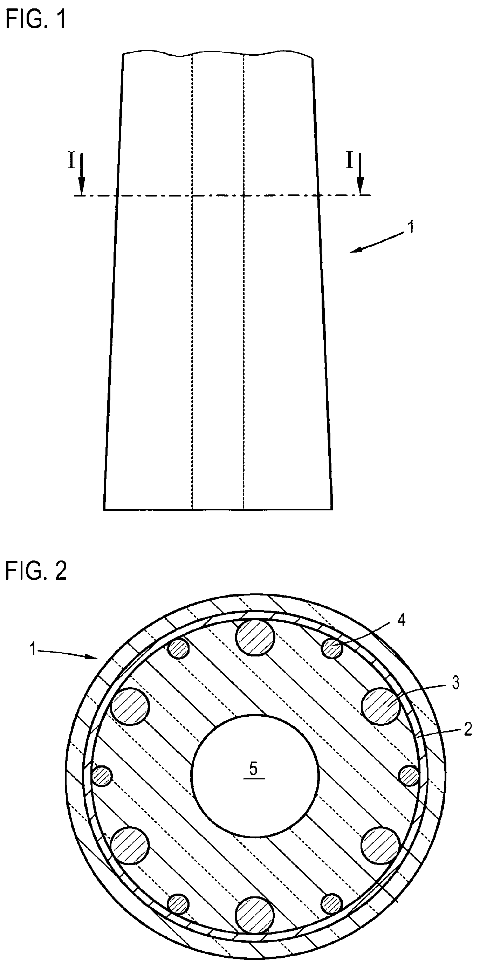

Figur 1 zeigt eine Stütze 1, die im Schleuderverfahren aus einem ultrahochfesten Beton hergestellt ist. In der geschnittenen Ansicht von Fig. 2 erkennt man, dass die Stütze 1 eine Wendelbewehrung 2 sowie mehrere in Längsrichtung angeordnete vorgespannte Bewehrungsstäbe 3, 4 aufweist. In dem dargestellten Ausführungsbeispiel ist der Durchmesser der Bewehrungsstäbe 3 doppelt so groß wie der Durchmesser der Bewehrungsstäbe 4, die Bewehrungsstäbe 3, 4 sind jeweils abwechselnd angeordnet. Dieses Ausführungsbeispiel ist jedoch nicht als Beschränkung zu verstehen, da die genaue Dimensionierung der Bewehrungsstäbe im Rahmen der Bemessung erfolgt. Im Inneren der Stütze 1 befindet sich ein Hohlraum 5, der während des Schleudervorgangs gebildet wird.

Bei dem in den Figuren 1 und 2 dargestellten Ausführungsbeispiel werden lediglich ca. 80 kg Stahl pro Meter benötigt, wohingegen eine herkömmliche Stütze gleicher Tragfähigkeit fast 400 kg Stahl pro Meter benötigt.

Bei dem für dieses Ausführungsbeispiel verwendeten ultrahochfesten Beton hat ein Kubikmeter die folgende Zusammensetzung: 550 kg Zement (Portlandzement), 140 kg Wasser, 700 kg Sand, 1.000 kg Basaltsplitt als Gesteinskörnung, 80 kg Microsilikapulver, 120 kg Quarzmehl. Der in diesem Beispiel verwendete Basaltsplitt ist ein magmatisches Gestein und gehört zu den Vulkaniten. Zusätzlich kann eine geringe Menge Fließmittel als Zusatzmittel zugegeben werden. Der gemäß dieser Rezeptur gemischte ultrahochfeste Beton lässt sich gut verarbeiten, da er weniger klebrig ist und leicht in die Schleuderform eingebracht werden kann. Ebenso kann das ausgehärtete Betonbauteil leicht entformt werden, da es nicht an der Form festklebt, wie häufig bei herkömmlichen UHPC-Betonmischungen zu beobachten ist. Der erfindungsgemäße Beton zeichnet sich durch eine weiche Frischbetonkonsistenz aus, die die Verarbeitung, insbesondere das Einbringen in die Schleuderform erleichtert. Der fließfähige Beton füllt auch kleine Zwischenräume der Bewehrung aus. Nach dem Schleudervorgang, bei dem hohe Zentrifugalkräfte wirken, die die gewünschte hohe Dichtheit bewirken, weist der noch nicht ausgehärtete Beton eine hohe Grünstandfestigkeit auf, d.h. er behält seine durch den Schleudervorgang erhaltene geometrische Form bei und läuft nicht an der Form herunter.

Die Druckfestigkeit des nach der angegebenen Mischung hergestellten ultrahochfesten Betons beträgt wenigstens 140 N/mm², der Elastizitätsmodul wenigstens 55.000 N/mm². Der in diesem Ausführungsbeispiel beschriebene ultrahochfeste Beton benötigt keine teuren chemischen Zusätze, stattdessen wird ein beträchtlicher Anteil Basaltsplitt als Gesteinskörnung verwendet, der praktisch überall zur Verfügung steht, so dass der ultrahochfeste Beton kostengünstig herstellbar ist.

Die hohe Festigkeit, die sich durch den Schleudervorgang ergibt, wird darauf zurückgeführt, dass kleine Hohlräume zwischen den Bestandteilen des noch nicht erhärteten Betons durch feineres Material, insbesondere durch den Basaltsplitt, gefüllt werden, so dass sich eine hohe Dichte ergibt. Die erfindungsgemäße Stütze zeichnet sich durch gute Brandschutzeigenschaften aus, da kein physikalisch gebundenes Wasser enthalten ist. Aus dem ultrahochfesten Beton hergestellte Betonbauteile besitzen eine Lebensdauer in üblichen Expositionsklassen von wenigstens 150 Jahren.

## Patentansprüche

1. Betonbauteil, das im Schleuderverfahren hergestellt und als Stütze (1) oder Mast ausgebildet ist und eine schlaffe oder vorgespannte Stahlbewehrung aufweist, **dadurch gekennzeichnet, dass** es aus ultrahochfestem Beton besteht, der Zement, Gesteinskörnung, Wasser, Zusatzstoffe und Zusatzmittel umfasst, wobei die Gesteinskörnung pro Kubikmeter Beton 800 kg bis 1.300 kg eines magmatischen Gesteins in Form von Splitt umfasst.

2. Betonbauteil nach Anspruch 1, **dadurch gekennzeichnet, dass** ein Kubikmeter Beton 450 kg bis 650 kg Zement enthält.

3. Betonbauteil nach Anspruch 1 oder 2, **dadurch gekennzeichnet, dass** ein Kubikmeter Beton 120 kg bis 160 kg Wasser enthält.

4. Betonbauteil nach einem der vorangehenden Ansprüche, **dadurch gekennzeichnet, dass** ein Kubikmeter Beton 500 kg bis 1.000 kg Sand enthält.

5. Betonbauteil nach einem der vorangehenden Ansprüche, **dadurch gekennzeichnet, dass** ein Kubikmeter Beton 60 kg bis 100 kg Microsilikapulver enthält.

6. Betonbauteil nach einem der vorangehenden Ansprüche, **dadurch gekennzeichnet, dass** ein Kubikmeter Beton 50 kg bis 200 kg Quarzmehl enthält.

7. Betonbauteil nach einem der vorangehenden Ansprüche, **dadurch gekennzeichnet, dass** ein Kubikmeter Beton 0,5 kg bis 2,5 kg Polypropylen-Microfasern enthält.

8. Betonbauteil nach einem der vorangehenden Ansprüche, **dadurch gekennzeichnet, dass** der ultrahochfeste Beton eine Druckfestigkeit von wenigstens 140 N/mm² aufweist.

9. Betonbauteil nach einem der vorangehenden Ansprüche, **dadurch gekennzeichnet, dass** der ultrahochfeste Beton einen Elastizitätsmodul von wenigstens 55.000 N/mm², vorzugsweise 65.000 N/mm² oder mehr, aufweist.

10. Betonbauteil nach einem der vorangehenden Ansprüche, **dadurch gekennzeichnet, dass** der ultrahochfeste Beton eine Dichte von 2,6 t/m³ bis 2,7 t/m³, vorzugsweise näherungsweise 2,65 t/m³, aufweist.

11. Betonbauteil nach einem der vorangehenden Ansprüche, **dadurch gekennzeichnet, dass** das magmatische Gestein vulkanisches Gestein (Vulkanit) aufweist, vorzugsweise Basalt und/oder Andesit und/oder Trachyt.

12. Betonbauteil nach einem der vorangehenden Ansprüche, **dadurch gekennzeichnet, dass** das magmatische Gestein Tiefengestein (Plutonit) aufweist, vorzugsweise Granit und/oder Diorit und/oder Syenit.

## Claims

1. A concrete structural component, which is produced by the centrifugal casting process and is configured as a column or mast and comprises non-prestressed or pretensioned steel reinforcement, **characterized in that** it consists of ultra-high performance concrete comprising cement, aggregate, water, fillers, and additives, wherein the aggregate comprises 800 kg to 1,300 kg of an igneous rock in the form of crushed stone per cubic meter of concrete.

2. The concrete structural component concrete according to claim 1, **characterized in that** one cubic meter of concrete contains 450 kg to 650 kg of cement.

3. The concrete structural component according to claim 1 or 2, **characterized in that** one cubic meter of concrete contains 120 kg to 160 kg of water.

4. The concrete structural component according to one of the preceding claims, **characterized in that** one cubic meter of concrete contains 500 kg to 1000 kg of sand.

5. The concrete structural component according to one of the preceding claims, **characterized in that** one cubic meter of concrete contains 60 kg to 100 kg microsilica powder.

6. The concrete structural component according to one of the preceding claims, **characterized in that** one cubic meter of concrete contains 50 kg to 200 kg of quartz powder.

7. The concrete structural component according to one of the preceding claims, **characterized in that** one cubic meter of concrete contains 0.5 kg to 2.5 kg of polypropylene microfibers.

8. The concrete structural component according to one of the preceding claims, **characterized in that** the ultra-high performance concrete comprises a compressive strength of at least 140 N/mm².

9. The concrete structural component according to one of the preceding claims, **characterized in that** the ultra-high performance concrete comprises a modulus of elasticity of at least 55,000 N/mm², and preferably 65,000 N/mm² or above.

10. The concrete structural component according to one of the preceding claims, **characterized in that** the ultra-high performance concrete comprises a density of 2.6 t/m³ to 2.7 t/m³, preferably of approximately 2.65 t/m³.

11. The concrete structural component according to one of the preceding claims, **characterized in that** the igneous rock comprises volcanic rock (vulcanite), preferably basalt and/or andesite and/or trachyte.

12. The concrete structural component according to one of the preceding claims, **characterized in that** the igneous rock comprises abyssal rock (plutonite), preferably granite and/or diorite and/or syenite.

## Revendications

1. Élément de construction en béton fabriqué par une procédé de centrifuge, réalisé sous forme de colonne (1) ou de mât et comportant une armature en acier lâche ou précontrainte, **caractérisé en ce qu'**il se compose de béton à ultra hautes performances qui comprend du ciment, des granulats de roche, de l'eau, des additifs et adjuvants, **en ce que** les granulats de roche par mètre cube de béton contiennent 800 kg à 1300 kg de roche magmatique sous forme de gravillons.

2. Élément de construction en béton selon la revendication 1, **caractérisé en ce qu'**un mètre cube de béton contient 450 kg à 650 kg de ciment.

3. Élément de construction en béton selon la revendication 1 ou 2, **caractérisé en ce qu'**un mètre cube de béton contient 120 kg à 160 kg d'eau.

4. Élément de construction en béton selon l'une des revendications précédentes, **caractérisé en ce qu'**un mètre cube de béton contient 500 kg à 1000 kg de sable.

5. Élément de construction en béton selon l'une des revendications précédentes, **caractérisé en ce qu'**un mètre cube de béton contient 60 kg à 100 kg de poudre de microsilice.

6. Élément de construction en béton selon l'une des revendications précédentes, **caractérisé en ce qu'**un mètre cube de béton contient 50 kg à 200 kg de poudre de quartz.

7. Élément de construction en béton selon l'une des revendications précédentes, **caractérisé en ce qu'**un mètre cube de béton contient 0,5 kg à 2,5 kg de microfibres de polypropylène.

8. Élément de construction en béton selon l'une des revendications précédentes, **caractérisé en ce que** le béton à ultra hautes performances présente une résistance à la compression d'au moins 140 N/mm².

9. Élément de construction en béton selon l'une des revendications précédentes, **caractérisé en ce que** le béton à ultra hautes performances présente un module d'élasticité d'au moins 55 000 N/mm², de préférence de 65 000 N/mm² ou plus.

10. Élément de construction en béton selon l'une des revendications précédentes, **caractérisé en ce que** le béton à ultra hautes performances présente une densité de 2,6 t/m³ à 2,7 t/m³, de préférence approximativement de 2,65 t/m³.

11. Élément de construction en béton selon l'une des revendications précédentes, **caractérisé en ce que** la roche magmatique comporte de la roche volcanique (vulcanite), de préférence du basalte et/ou de l'andésite et/ou du trachyte.

12. Élément de construction en béton selon l'une des revendications précédentes, **caractérisé en ce que** la roche magmatique comporte de la roche plutonique (plutonite), de préférence du granite et/ou de la diorite et/ou de la syénite.
